# EUROPEAN PATENT SPECIFICATION

(11) **EP 4 175 098 B1**
(45) Date of publication and mention of the grant of the patent: **05.08.2026**
(21) Application number: 22204562.7
(22) Date of filing: 28.10.2022
(51) Int. Cl.: H02J 1/00, H02J 1/10, H02J 3/00, H02J 4/00

(54) **HYBRID ELECTRIC SINGLE ENGINE DESCENT FAILURE MANAGEMENT**
AUSFALLVERWALTUNG DES ABSTIEGS EINES HYBRIDEN ELEKTRISCHEN EINZELMOTORS
GESTION DE DÉFAILLANCE D'UN MOTEUR ÉLECTRIQUE HYBRIDE UNIQUE LORS DE LA DESCENTE

(30) Priority: 29.10.2021 US 202163273449 P
(43) Date of publication of application: 03.05.2023
(73) Proprietor: RTX Corporation, Farmington, CT 06032 (US)
(72) Inventor: BAIG, Zubair Ahmed, South Windsor, 06074 (US); COLLOPY, Gary, Vernon, 06066 (US)
(74) Representative: Dehns

(56) References cited:
- US-A1- 2021 222 629

## Description

### BACKGROUND

Exemplary embodiments pertain to the art of gas turbine engines, and in particular to aircraft hybrid electric engines.

An aircraft can selectively power a hybrid electric engine by providing electric power from various sources, such as a battery system, another engine, or an APU/SPU. During descent with one engine operating on electric power and the other engine operating with fuel burn, various aspects must be considered such that the engine system operates efficiently, and the engine operating on electric power can rapidly resume a fuel-burn mode of operation.

During single engine descent, thrust matching is performed. For example, 1,000 pounds (4,448N) of thrust per engine would be achieved by driving one engine fan electrically to provide 1000 pounds (4,448N) of thrust, and the other engine in a fuel-burning mode can generate power for the electrically-operated engine and produce 1000 pounds (4,448N) of thrust.

US 2021/222629 A1 discloses asymmetric hybrid aircraft operation at idle.

### SUMMARY

According to a first aspect, a fault management system for an aircraft is as claimed in claim 1. Embodiments of this aspect of the invention are as claimed in the dependent claims thereof.

### BRIEF DESCRIPTION OF THE DRAWINGS

The following descriptions should not be considered limiting in any way. With reference to the accompanying drawings, like elements are numbered alike:
FIG. 1 is a partial cross-sectional illustration of a gas turbine engine according to a non-limiting embodiment;
FIG. 2 is a schematic diagram of a hybrid gas turbine engine system including a power management system, in accordance with a non-limiting embodiment of the disclosure;
FIG. 3 is a block diagram of a hybrid electric engine fault management system operating in a normal mode during aircraft descent according to a non-limiting embodiment;
FIG. 4 is a block diagram of a hybrid electric engine fault management system operating in a first fault mode during aircraft descent according to a non-limiting embodiment;
FIG. 5 is a block diagram of a hybrid electric engine fault management system operating in a second fault mode during aircraft descent according to a non-limiting embodiment;
FIG. 6 is a block diagram of a hybrid electric engine fault management system operating in a third fault mode during aircraft descent according to a non-limiting embodiment; and
FIG. 7 is a block diagram of a hybrid electric engine fault management system operating in a fourth fault mode during aircraft descent according to a non-limiting embodiment.

### DETAILED DESCRIPTION

A detailed description of one or more embodiments of the disclosed apparatus and method are presented herein by way of exemplification and not limitation with reference to the Figures.

Electric generators and motors have been incorporated into aircraft engines to provide a hybrid electric engine that produces electric energy for various engine and aircraft support systems. However, primary power production and operation relies on conversion of the high-energy exhaust gas flow into mechanical power. Aircraft control systems for hybrid electric engines systems have been developed, which allow for selectively powering the hybrid electric engine by providing electric power from various sources, such as a battery system, another engine, or an APU/SPU to reduce fuel consumption and improve overall engine efficiencies. During descent with one engine operating on electric power and the other engine operating with fuel burn, various aspects must be considered such that the engine system operates efficiently, and the engine operating on electric power can rapidly resume a fuel-burn mode of operation.

When operating with one fuel-burning engine during descent, failure management must be considered to handle a fault that affects one of the distribution systems. If a short circuit occurs on the motor controller, for example, the failure management system must operate to ensure that the failure does not feed into other electrical machines, as such a condition could result in losing all power generating capability on the engine.

Various non-limiting embodiments described herein provides a failure management system that is configured to enhance system reliability to account for a loss based on dependency between components during single-engine descent of an aircraft. The term "single-engine descent" refers to the period when the aircraft decreases altitude prior to approach using one engine that is "fuel-powered" (also referred to herein as "fuel-powered", "activated", "fuel activated", a "fuel activated engine" and/or a "sourced engine") while a second fuel to a second engine is blocked (also referred to herein as "deactivated, "fuel deactivated" a "fuel deactivated engine", and/or a "motoring engine").

The fault management system for a hybrid gas turbine engine system includes a first low spool electric machine, a second low spool electric machine, and a high spool electric machine. During aircraft descent fuel to a first gas turbine engine is shut off while a remaining gas turbine engine can remain powered by fuel to reduce fuel consumption of the aircraft. The fuel powered engine provide powers to either of two connected electric machines to then provide power to the either of two electric machines connected to the fuel off engine or to the aircraft electric system. In the event that either the source low spool electric machine or the motoring low spool electric machine experiences a fault, the remaining non-faulty source electric machine can continue providing electrical power. The high spool electric machine is activated to supplement the electrical power provided by the non-faulty low spool electric machine. Accordingly, the failure management system according to various non-limiting embodiments described herein can ensure that the aircraft's use of the aircraft's fuel-on engine provides sufficient thrust for the aircraft during descent. In addition, the failure management system to ensure the aircraft's use of the aircrafts fuel-on engine provides sufficient thrust and power to facilitate re-start of the fuel-off engine, e.g. following descent to complete approach and landing of the aircraft.

According to one or more non-limiting embodiments, a failure management system employs two low spool electric machines and a power distribution network that can be operated by the aircraft controller. Should one of the low spool electric machines experience a fault, the remaining normal operating low spool electric machine can continue operating, while the aircraft controller selects various different power distribution paths (by controlling one or more contactors) to ensure the aircraft receives sufficient power during descent. In addition, the aircraft controller can select a power distribution path that allows for restarting one of the engines to complete aircraft landing despite experiencing a fault in one of the low spool electric machines.

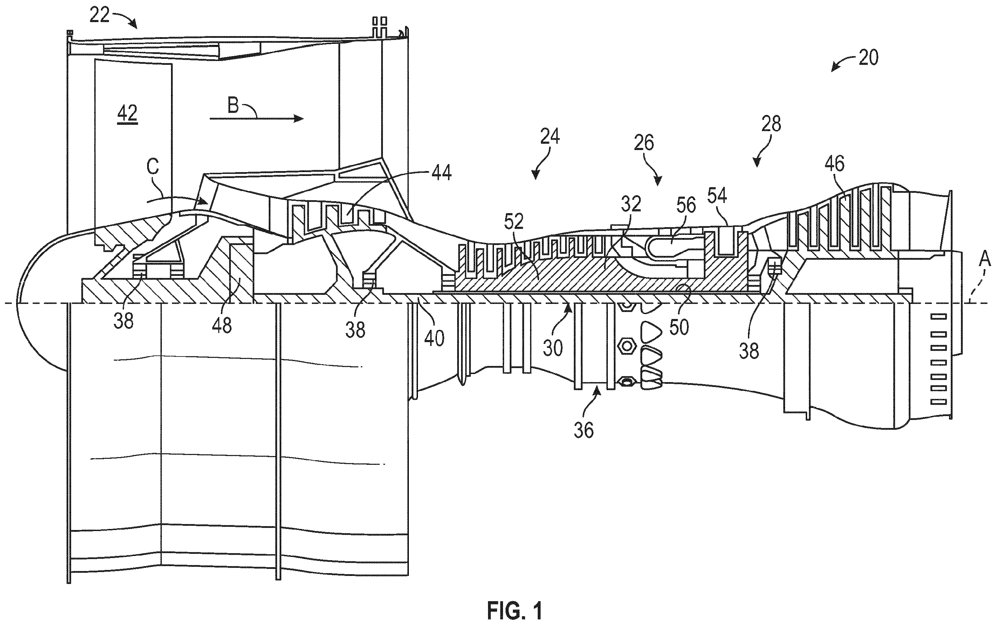

With reference now to FIG. 1, a gas turbine engine 20 is illustrated according to a non-limiting embodiment. The gas turbine engine 20 is disclosed herein as a multi-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with multi-spool turbofans as the teachings may be applied to other types of turbine engines including, for example, three-spool architectures.

The exemplary engine 20 generally includes one or more low spool generator machines 30, referred to herein as a "low spool" 30 and a high spool generator machine 32, referred to herein as a "high spool 32" mounted for rotation about an engine central longitudinal axis (A) relative to an engine static structure 36 via several bearing systems 38. It should be understood that various bearing systems 38 at various locations may alternatively or additionally be provided, and the location of bearing systems 38 may be varied as appropriate to the application.

The low spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low spool 30. The high spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive a respective low spool 30 and high spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach and about 35,000 feet (10,688 meters). The flight condition of 0.8 Mach and 35,000 ft (10,688 meters), with the engine at its best fuel consumption, also known as "bucket cruise. Thrust Specific Fuel Consumption (TSFC') is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction. In one or more non-limiting embodiments, the temperature correction can be determined according to the relationship of [(Tram °R)/(518.7 °R)]0.5., where Tram is a ram air temperature. The "Low corrected fan tip speed" as disclosed herein according to one non-limiting embodiment is less than about 1150 ft/second (350.5 m/sec).

While the example of FIG. 1 illustrates one example of the gas turbine engine 20, it will be understood that any number of spools, inclusion or omission of the gear system 48, and/or other elements and subsystems are contemplated. Further, rotor systems described herein can be used in a variety of applications and need not be limited to gas turbine engines for aircraft applications. For example, rotor systems can be included in power generation systems, which may be ground-based as a fixed position or mobile system, and other such applications.

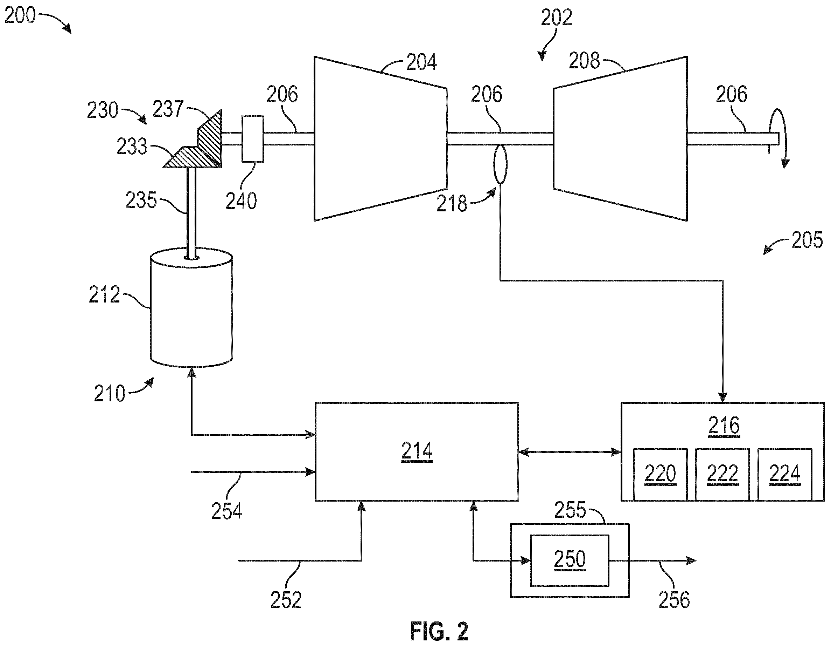

FIG. 2 illustrates portions of a hybrid gas turbine engine system 200 according to a non-limiting embodiment. The hybrid gas turbine engine system 200 includes a rotor system 202 and a power management system 205. The rotor system 202 includes at least one compressor section 204 and at least one turbine section 208 operably coupled to a shaft 206. The rotor system 202 can include one or more spools of the gas turbine engine 20 of FIG. 1, such as one or more low spools 30 and/or one or more high spools 32. For example, employing one or more low spool spools 30, one or more compressor sections 204 can be equivalent to the low pressure compressor 44, the shaft 206 can be equivalent to the inner shaft 40, and the at least one turbine section 208 can be equivalent to the low pressure turbine 46 of FIG. 1. When embodied as the high spool 32, one or more compressor sections 204 can be equivalent to the high pressure compressor 52, the shaft 206 can be equivalent to the outer shaft 50, and the at least one turbine section 208 can be equivalent to the high pressure turbine 54 of FIG. 1.

In the example of FIG. 2, a battery charging system 210 is operably coupled to the rotor system 202. The battery charging system 210 includes a generator 212 operably coupled to the shaft 206. In the example of FIG. 2, a geared interface 230 operably couples the generator 212 to the shaft 206. The geared interface 230 can include, for instance, an auxiliary gear 233 coupled to an auxiliary shaft 235 driven by the generator 212. The geared interface 230 can also include a rotor gear 237 coupled to the shaft 206. The auxiliary gear 233 and the rotor gear 237 can each be beveled gears. The auxiliary shaft 235 can be a tower shaft that enables the generator 212 to be separated at a greater distance from the rotor system 202 than direct coupling to the shaft 206 would provide. Further separation of the generator 212 from the rotor system 202 can improve accessibility to the generator 212 for servicing and may reduce heating effects of the rotor system 202 on the generator 212 (e.g., due to fuel combustion). A disconnect 240, such as a clutch, can be positioned between the generator 212 and a portion of the shaft 206 such that the generator 212 can be selectively engaged and disengaged to rotate with rotation of the shaft 206. In alternate embodiments, the generator 212 is operably coupled to the shaft 206 absent the geared interface 230 (e.g., direct coupling).

The battery charging system 210 also includes a power converter system 214 in signal communication with the generator 212 and a battery system 255. In some embodiments, the generator 212 is a motor-generator configurable in a generator mode to charge a rechargeable battery included in the battery system, and in a motor mode to provide supplemental rotation force to the rotor system 202 of gas turbine engine 20 of FIG. 1. The power converter system 214 includes converter electronics configured to condition current from the generator 212 such that the battery included in the battery system 255 can be repeatedly recharged. The converter electronics include, but are not limited to, analog current (AC) distribution circuitry, bi-directional power electronic circuitry, direct current (DC) power distribution electronics, AC-to-DC converter electronics, DC-to-DC converter electronics, rectifier circuits, a battery system, and a supplemental power unit (SPU).

The generator 212 can include conventional generator/motor components, such as a rotor and stator, including a plurality of windings and/or permanent magnets. The converter electronics 214 can also include conventional current control electronics, such as filters, switching components, rectifiers, inverters, voltage converters, and the like. The generator 212 can perform as a variable frequency generator in a generator mode due to speed fluctuations of rotation of the shaft 206, which may be primarily driven by the at least one turbine section 208. Alternatively, a frequency normalizing component can interface with the generator 212 to produce a constant frequency output (e.g., through the converter electronics 214 or as a mechanical interface between the generator 212 and the shaft 206). In some embodiments, the generator 212 may be operable as a starter motor to partially or completely power rotation of the shaft 206 in a starting mode of operation (e.g., to start the gas turbine engine 20 of FIG. 1) and/or can provide supplemental power to the shaft 206 during various flight phases of the hybrid electric aircraft 200. Other uses and functions for the generator 212 are contemplated.

The converter electronics 214 can control charging of the battery system 255 responsive to a controller 216. The controller 216 can enable a flow of a charging current from the generator 212 or a power input 252 to charge the battery included in the battery system 255 as regulated and conditioned through the converter electronics 214. The power input 252 can be an external input, such as power received through a plug interface while the hybrid electric aircraft 200 is on the ground at a ground-based power source, e.g., at a gate or service location. In some embodiments, the converter electronics 214 may receive electric current from a supplemental power input 254 to provide a supplemental or alternative power source for charging the battery included in the battery system 255. For instance, the supplemental power input 254 may receive electric current from a supplemental power unit or another instance of the gas turbine engine 20 on the hybrid electric aircraft 200. The charge stored in the battery system 255 can provide an electric current for a propulsion system use 256, which may include powering one or more electric motors of the hybrid electric aircraft 200 during various operational states and/or providing power to the generator 212 when operating in a motor mode, for instance, to assist in driving rotation of shaft 206. The propulsion system uses 256 can be part of the gas turbine engine 20 that includes the rotor system 202 or another aircraft system, such as another instance of the gas turbine engine 20 on the hybrid electric aircraft 200.

In embodiments, the controller 216 of the battery charging system 210 can monitor one or more rotor system sensors 218 while the rotor system 202 is rotating. The rotor system sensors 218 can be any type or combination of sensors operable to measure aspects of the motion of the rotor system 202. For example, the rotor system sensors 218 can include one or more accelerometers, speed sensors, torque sensors, and the like. The rotor system sensors 218 can include existing sensors used for controlling the gas turbine engine 20. The controller 216 can control a charging of the battery system 255, for instance, by selecting the source of electric current received through the converter electronics 214. Data collected from the rotor system sensors 218 can be used to determine an operational status of a gas turbine engine 20 of FIG. 2. Alternatively, the operational status of a gas turbine engine 20 can be received as a signal or message from an alternate source, such as an engine system or aircraft communication bus. The controller 216 may also control other system aspects, such as controlling operation of the gas turbine engine 20 of FIG. 1. For example, the controller 216 can be integrally formed or otherwise in communication with a full authority digital engine control (FADEC) of the gas turbine engine 20. The rotor system sensors 218 need not be directly coupled to the controller 216, as sensor data or sensor-derived data can be observed or determined by another control (e.g., a FADEC) and provided to the controller 216.

In embodiments, the controller 216 can include a processing system 220, a memory system 222, and an input/output interface 224. The processing system 220 can include any type or combination of central processing unit (CPU), including one or more of: a microprocessor, a digital signal processor (DSP), a microcontroller, an application specific integrated circuit (ASIC), a field programmable gate array (FPGA), or the like. The memory system 222 can store data and instructions that are executed by the processing system 220. In embodiments, the memory system 222 may include random access memory (RAM), read only memory (ROM), or other electronic, optical, magnetic, or any other computer readable medium onto which is stored data and algorithms in a non-transitory form. The input/output interface 224 is configured to collect sensor data from the one or more rotor system sensors 218 and interface with the power converter system 214 and/or other systems (not depicted).

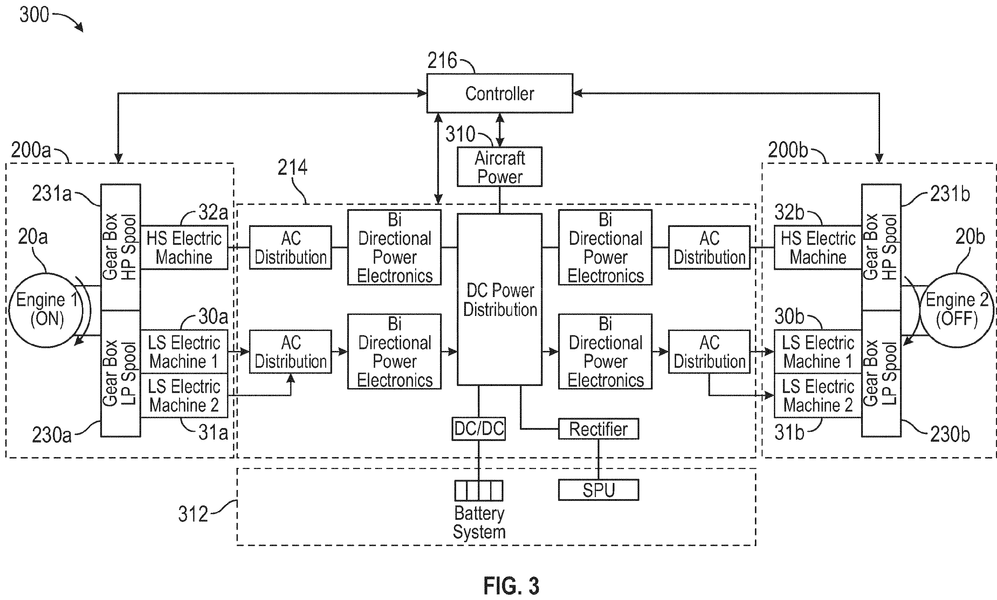

Turning now to FIG. 3, a hybrid electric engine fault management system 300 is illustrated operating in a normal mode during aircraft descent according to a non-limiting embodiment. The hybrid electric engine fault management system 300 includes a first hybrid electric engine system 200a, a second hybrid electric engine syst 200b, a power converter system 214, an aircraft power system 310, a supplemental power system 312, and an aircraft controller 216.

The first hybrid electric engine system 200a includes a first gas turbine engine 20a, a first low spool electric machine 30a, a second low spool electric machine 31a, and a high spool electric machine 32a. In one or more non-limiting embodiments, the first and second low spool electric machines 30a and 31a can be constructed as first and second low spool spools 30a and 31a, respectively, and the high spool electric machine 32a can be constructed as a high spool electric machine 32a. The high-speed electric machine 32a is coupled to the first hybrid electric engine system 20a via a high spool gearing interface 231a. Similarly, the first and second electric machines 30a and 31a are coupled to the first gas turbine engine 20a via a low spool geared interface 230a. Although a single low spool geared interface 230a is illustrated, it should be appreciated that the first hybrid electric engine system 200a can implement a first low spool geared interface to couple the first low spool electric machine 30a to the first gas turbine engine 20a, while a second low spool geared interface couples the second low spool electric machine 31a to the first gas turbine engine 20a.

The second hybrid electric engine system 200b includes a second gas turbine engine 20b, a second low spool electric machine 30b, a second low spool electric machine 31b, and a high spool electric machine 32b. In one or more non-limiting embodiments, the first and second low spool electric machines 30b and 31b can be constructed as first and second low spool spools 30b and 31b, respectively, and the high spool electric machine 32b can be constructed as a high spool electric machine 32b. The high-speed electric machine 32b is coupled to the second hybrid electric engine system 20b via a high spool gearing interface 231b. Similarly, the first and second electric machines 30b and 31b are coupled to the second gas turbine engine 20b via a low spool geared interface 230b. Although a single low spool geared interface 230b is illustrated, it should be appreciated that the second hybrid electric engine system 200b can implement a first low spool geared interface to couple the first low spool electric machine 30b to the first gas turbine engine 20b, while a second low spool geared interface couples the second low spool electric machine 31b to the first gas turbine engine 20b.

The power converter system 214 includes converter electronics configured to condition current from the generator 212 to provide power to the aircraft power system 310 and/or the supplemental power system 312. For example, the power converter system 214 can deliver power to the aircraft power system 310, which can be utilized to power the aircraft galley, cabin lighting system, cabin HVAC systems, etc. The power converter system 214 can also deliver power to the supplemental power system 312 to charge one or more rechargeable batteries included in a battery system. The power converter system 214 can also deliver supplemental power from the supplemental power system 312 (e.g., from the battery system and/or a SPU) to the aircraft power system 310 and/or to the first and or second hybrid engine system 200a and 200b.

The controller 216 is in signal communication with the first hybrid electric engine system 200a, the second hybrid electric engine system 200b, the power converter system 214 and the aircraft power system 310. In one or more non-limiting embodiments, the controller 216 can selectively control various operations of the first and second hybrid electric engine systems 200a and 200b such as, for example, selectively activating and deactivating the first and/or second engines 20a and 20b. The controller 216 can also selectively output electrical power the generated by the low spool electric machines 30a and 31a and high spool electric machine 32a included in the fuel-activated hybrid electric engine system 200a. Likewise, the controller can selectively output electrical power generated by the low spool electric machines 30b and 31b and the high spool electric machine 32b included in the second hybrid electric engine systems 200b. In one or more non-limiting embodiments, the controller can selectively output electrical power generated by the low spool electric machines and the high spool electric machine independently from one another. In one or more non-limiting embodiments, the controller 216 can selectively output electrical power from one of the low spool electric machines (e.g., low spool electric machine 31a) included in a given fuel-activated hybrid electric engine system(e.g., fuel-activated hybrid electric engine system 200a) with respect to other low spool electric machines (e.g., low spool electric machine 30a) included in the fuel-activated hybrid electric engine system (e.g., hybrid electric engine system 200a).

With continued reference to FIG. 3, hybrid electric engine fault management system 300 is shown operating in a normal mode during aircraft descent. To reduce fuel consumption and improve overall operating efficiency during descent of the aircraft, the aircraft controller 216 controls the aircraft in a single-engine descent mode to provide two sources of available power. The two sources of power includes one fuel-on engine (e.g., first gas turbine engine 20a) and the supplemental power supply 312. Although the first gas turbine engine 20a is shown as the fuel-on engine and the second gas turbine engine 20b is shown as the fuel-off engine, it should be appreciated that the first gas turbine engine 20a can be selected as the fuel-off engine and the second gas turbine engine 20b selected as the fuel-on engine without departing from the scope of the invention. In one or more embodiments, when invoking the single-engine descent mode, the fuel-activated engine high spool 32a and the low spool electrical machines 30a and 31a are always operating a power source (e.g., generating) and the fuel-off engine electrical machines 30b, 31b, and 32b are always sink (e.g., motoring). Accordingly, power generated by the fuel-powered electrical machines 30a, 31a and/or 32a included in the first hybrid electric engine system 200a are conditioned by the power converter system 214, and selectively delivered through the power converter system 214 and to the fuel-off second hybrid electric engine system 200b.

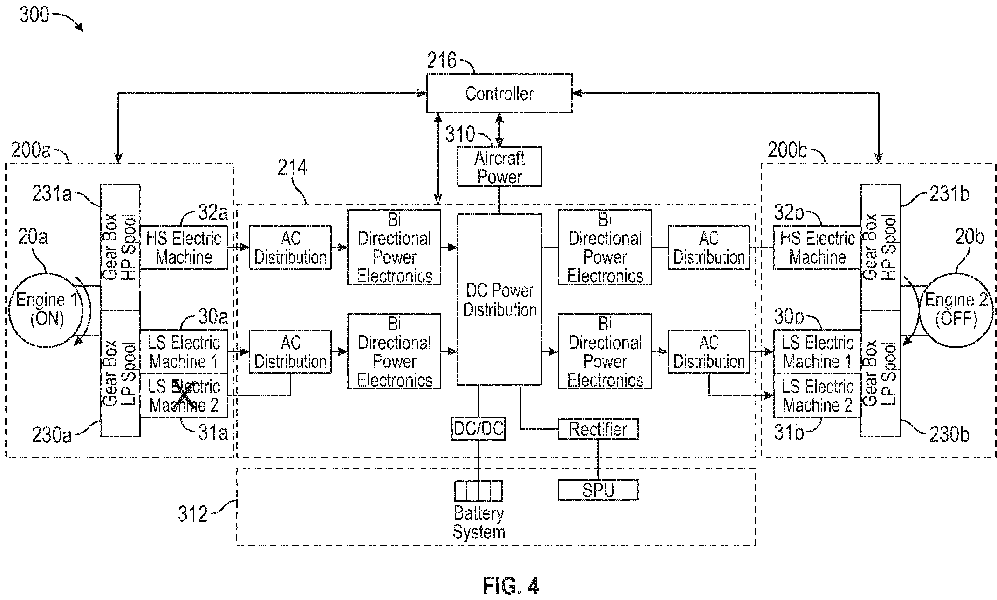

Turning now to FIG. 4, the hybrid electric engine fault management system 300 is shown operating in a first fault mode following a fault occurring in the second low spool electric machine 31a during aircraft descent. In response to detecting the faulty low spool electric machine 31a, the aircraft controller 216 outputs power generated by the high spool electric machine 32a coupled to the fuel-activated gas turbine engine 20a. Accordingly, the electrical power generated by the high spool electric machine 32a can supplement the electrical power by the non-faulty low spool electric machine 30a. In one or more non-limiting embodiments, the electrical power output by the high spool electric machine 32a is conditioned by the power converter system 214 and added to the electrical power generated by the non-faulty low spool electric machine 30a via a DC power distribution network. The DC power distribution network can be controlled by the aircraft controller 216 to selectively distribute power generated by the high spool electric machine 32a throughout the hybrid electric engine fault management system 300. For example, the aircraft controller 216 can select various different power distribution paths by controlling one or more contactors included in the DC power distribution network. In one or more non-limiting embodiments, individually generated electrical power can be combined by the DC power distribution network to generated combined electrical power, or supplement a first power with a second power. The combined electrical power can further be conditioned by the power converter system 214 before being delivered to the first and/or second low spool electric machine 30b and 31b included in the second hybrid electric engine system 200b.

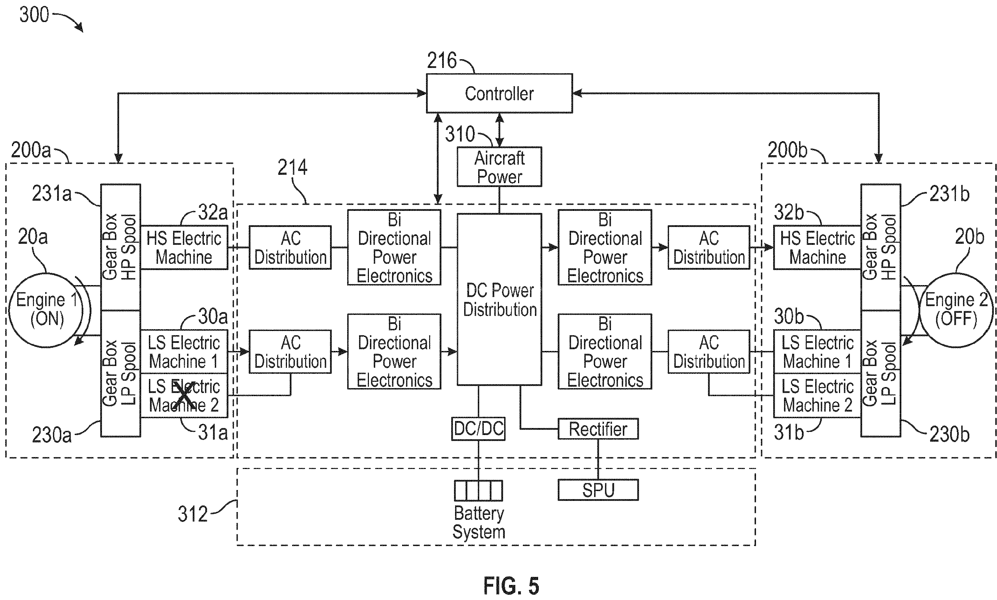

Referring to FIG. 5, the hybrid electric engine fault management system 300 is shown operating in a second fault mode following a fault occurring in the second low spool electric machine 31a during aircraft descent. In response to detecting the faulty low spool electric machine 31a, the power converter system 214 conditions the electrical power generated by the non-faulty low spool electric machine 30a, and the aircraft controller operates the DC power distribution network to distribute the conditioned electrical power generated by the non-faulty low spool electric machine 30a to the high spool electric machine 32b included in the second hybrid electric engine system 200b. Accordingly, the high spool electric machine 32b receives sufficient power to re-start the second gas turbine engine 20b.

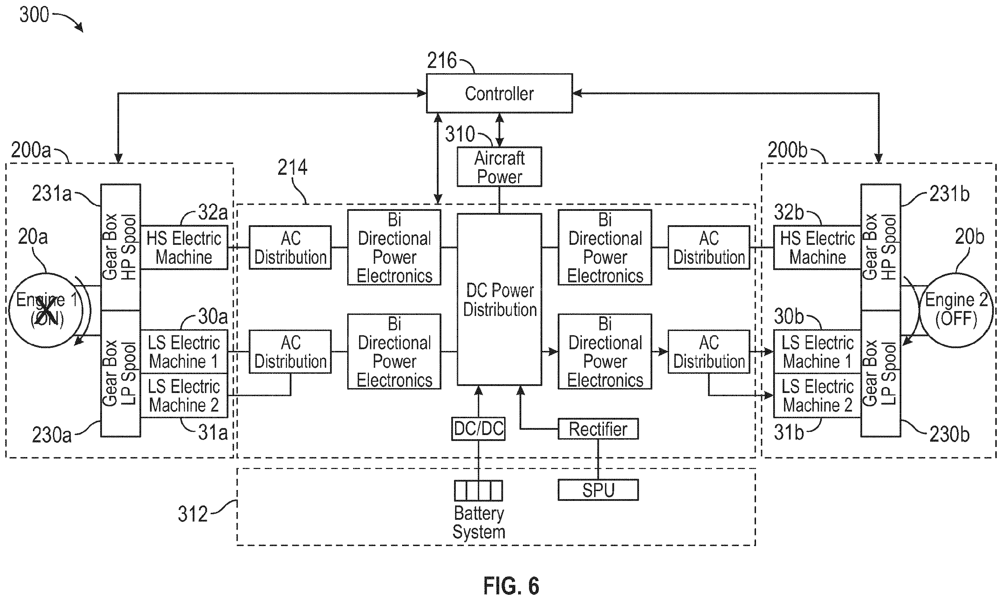

Turning to FIG. 6, the hybrid electric engine fault management system 300 is shown operating in a third fault mode following a fault occurring in one of the gas turbine engines during aircraft descent, e.g., the first gas turbine engine 20a. Such a fault may also cause faults to occur in the corresponding high spool electric machine 32a, along with the corresponding first and second low spool electric machines 30a and 31a. Therefore, in response to detecting the fault in the first gas hybrid engine 20a, the aircraft controller 216 controls the supplemental power system 312 (e.g., the battery system and/or the SPU) to output electrical power, respectively, which is then conditioned by the power converter system 214. The conditioned power can then be distributed by the DC power distribution network to the high spool electric machine 32b and/or the first and second low spool electric machines 30b and 31b included in the second hybrid electric engine system 200b.

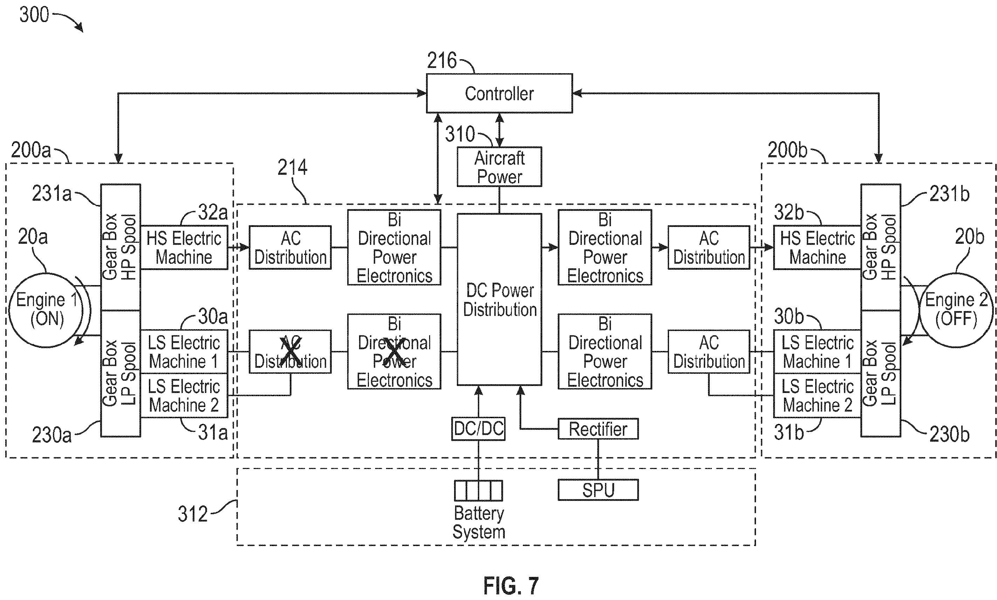

Referring to FIG. 7, the hybrid electric engine fault management system 300 is shown operating in a fourth fault mode following a fault occurring during aircraft descent. In this example, the detected fault includes one or more faulty power converter components connected to the first and/or second low spool electric machines 30a and 31a. The faulty power converter components may prevent the power generated by the first and/or second low spool electric machines 30a and 31a from being sufficiently utilized during descent. Therefore, the aircraft controller 216 can output electrical power generated by the high spool electric machine 32a coupled to the fuel-activated gas turbine engine 20a, along with controlling the supplemental power system 312 (e.g., the battery system and/or the SPU) to output supplemental electrical power. The electrical power generated by the high spool electric machine 32a, along with the supplemental power output from the supplemental power system 312 can be conditioned by the power converter system 214 before being combined together and delivered to the second hybrid electric engine system 200b (e.g., the high spool electric machine 32b) via the DC power distribution network.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A fault management system for an aircraft, the fault management system comprising:
a first hybrid electric engine system (200a) including a first gas turbine engine (20a), a first low pressure/speed spool electric machine (30a), a second low pressure/speed spool electric machine (31a), and a high pressure/speed spool electric machine (32a);
a second hybrid electric engine system (200b) including a second gas turbine engine (20b); and
a controller (216) configured to determine a descent of the aircraft, and in response to determining the descent, stop fuel delivery to the second gas turbine engine (20b) included in the second hybrid electric engine system (200b) to provide a fuel-deactivated gas turbine engine while delivering fuel to the first gas turbine engine (20a) to provide a fuel-activated gas turbine engine, wherein the controller (216) is configured to detect a fault during the descent of the aircraft and to invoke at least one fault mode that operates the first low pressure/speed spool electric machine (30a) and/or the second low pressure/speed spool electric machine (31a) to output electrical power,
wherein the fault is associated with the first low pressure/speed spool electric machine (30a) or the second low pressure/speed spool electric machine (31a), and the at least one fault mode includes a first fault mode that continues operating a remaining non-faulty low pressure/speed spool electric machine to output the electrical power and that activates the high pressure/speed spool electric machine (32a) coupled to the fuel-activated first gas turbine engine (20a) to output second electrical power that is combined with the electrical power output by the non-faulty low pressure/speed spool electric machine (31a).

2. The fault management system of claim 1, further comprising a power converter system (214) configured to condition electrical power output from the first and/or second low pressure/speed spool electric machines.

3. The fault management system of claim 2, wherein the controller (216) is configured to control output of electrical power generated by the high pressure/speed spool (32) electric machine in response to invoking a or the first fault mode during the descent of the aircraft, and the power converter system (214) is configured to combine the electrical power output from the non-faulty low pressure/speed spool electric machine (31a) with the electrical power output from the high pressure/speed spool electric machine (32a) to provide combined electrical power.

4. The fault management system of claim 3, wherein the power converter system (214) is configured to distribute the combined electrical power to a second high pressure/speed spool electric machine (32b) included in the second hybrid electric engine system (200b).

5. The fault management system of any of claims 2 to 4, wherein the controller (216) is configured to detect a fault with the first low pressure/speed spool electric machine (30a) or the second low pressure/speed spool electric machine (31a), and to invoke a second fault mode that controls the power converter system (214) to distribute the electrical power output from the non-faulty low pressure/speed spool electric machine (31a) to a second high pressure/speed spool electric machine (32a) coupled to the fuel-deactivated second gas turbine engine (20b).

6. The fault management system of any of claims 2 to 5, wherein the controller (216) is configured to detect a converter fault between a component included in the power converter system (214) and the first low pressure/speed spool electric machine (30a) and/or the second low pressure/speed spool electric machine (31a), and is configured to control output of electrical power generated by a high pressure/speed spool electric machine (32a) coupled to the fuel-activated gas turbine.

7. The fault management system of claim 6, wherein, in response to detecting the converter fault, the controller (216) is further configured to control a supplemental power system (312) to output supplemental power that is combined with the first electrical power, and delivers the combined electrical power to the second hybrid electric engine system (200b).

8. The fault management system of any preceding claim, wherein the controller (216) is configured to detect a fault with the first hybrid electric and to invoke a third fault mode that controls a or the supplemental power system (312) to output supplemental power to the second hybrid electric engine system (200b).

9. The fault management system of claim 7 or 8, wherein the supplemental power system (312) includes a battery system (255) and/or a supplemental power unit , SPU.

## Patentansprüche

1. Ausfallverwaltungssystem für ein Luftfahrzeug, wobei das Ausfallverwaltungssystem umfasst:
ein erstes hybrides elektrisches Motorsystem (200a), das einen ersten Gasturbinenmotor (20a), eine erste Elektromaschine der Niederdruck-/Niederdrehzahlwelle (30a), eine zweite Elektromaschine der Niederdruck-/Niederdrehzahlwelle (31a) und eine Elektromaschine der Hochdruck-/Hochdrehzahlwelle (32a) umfasst;
ein zweites hybrides elektrisches Motorsystem (200b), das einen zweiten Gasturbinenmotor (20b) umfasst; und
eine Steuerung (216), die dazu ausgebildet ist, einen Abstieg des Luftfahrzeugs zu bestimmen und als Reaktion auf das Bestimmen des Abstiegs die Kraftstoffzufuhr zu dem zweiten Gasturbinenmotor (20b), der in dem zweiten hybriden elektrischen Motorsystem (200b) enthalten ist, zu stoppen, um einen kraftstoffdeaktivierten Gasturbinenmotor bereitzustellen, während Kraftstoff zu dem ersten Gasturbinenmotor (20a) geliefert wird, um einen kraftstoffaktivierten Gasturbinenmotor bereitzustellen, wobei die Steuerung (216) dazu ausgebildet ist, einen Ausfall während des Abstiegs des Luftfahrzeugs zu erkennen und mindestens einen Ausfallmodus aufzurufen, der die erste Elektromaschine der Niederdruck-/Niederdrehzahlwelle (30a) und/oder die zweite Elektromaschine der Niederdruck-/Niederdrehzahlwelle (31a) betreibt, um elektrische Leistung auszugeben,
wobei der Ausfall mit der ersten Elektromaschine der Niederdruck-/Niederdrehzahlwelle (30a) oder der zweiten Elektromaschine der Niederdruck-/Niederdrehzahlwelle (31a) verbunden ist und der mindestens eine Ausfallmodus einen ersten Ausfallmodus umfasst, der eine verbleibende nicht ausgefallene Elektromaschine der Niederdruck-/Niederdrehzahlwelle weiterhin betreibt, um die elektrische Leistung auszugeben, und der die mit dem kraftstoffaktivierten ersten Gasturbinenmotor (20a) gekoppelte Elektromaschine der Hochdruck-/Hochdrehzahlwelle (32a) aktiviert, um zweite elektrische Leistung auszugeben, die mit der von der nicht ausgefallenen Elektromaschine der Niederdruck-/Niederdrehzahlwelle (31a) ausgegebenen elektrischen Leistung kombiniert wird.

2. Ausfallverwaltungssystem nach Anspruch 1, ferner umfassend ein Leistungswandlersystem (214), das dazu ausgebildet ist, die von der ersten und/oder zweiten Elektromaschine der Niederdruck-/Niederdrehzahlwelle ausgegebene elektrische Leistung aufzubereiten.

3. Ausfallverwaltungssystem nach Anspruch 2, wobei die Steuerung (216) dazu ausgebildet ist, die Ausgabe der von der Elektromaschine der Hochdruck-/Hochdrehzahlwelle (32) erzeugten elektrischen Leistung als Reaktion auf das Aufrufen eines oder des ersten Ausfallmodus während des Abstiegs des Luftfahrzeugs zu steuern, und das Leistungswandlersystem (214) dazu ausgebildet ist, die von der nicht ausgefallenen Elektromaschine der Niederdruck-/Niederdrehzahlwelle (31a) ausgegebene elektrische Leistung mit der von der Elektromaschine der Hochdruck-/Hochdrehzahlwelle (32a) ausgegebenen elektrischen Leistung zu kombinieren, um kombinierte elektrische Leistung bereitzustellen.

4. Ausfallverwaltungssystem nach Anspruch 3, wobei das Leistungswandlersystem (214) dazu ausgebildet ist, die kombinierte elektrische Leistung an eine zweite Elektromaschine der Hochdruck-/Hochdrehzahlwelle (32b) zu verteilen, die in dem zweiten hybriden elektrischen Motorsystem (200b) enthalten ist.

5. Ausfallverwaltungssystem nach einem der Ansprüche 2 bis 4, wobei die Steuerung (216) dazu ausgebildet ist, einen Ausfall der ersten Elektromaschine der Niederdruck-/Niederdrehzahlwelle (30a) oder der zweiten Elektromaschine der Niederdruck-/Niederdrehzahlwelle (31a) zu erkennen und einen zweiten Ausfallmodus aufzurufen, der das Leistungswandlersystem (214) steuert, um die von der nicht ausgefallenen Elektromaschine der Niederdruck-/Niederdrehzahlwelle (31a) ausgegebene elektrische Leistung an eine zweite Elektromaschine der Hochdruck-/Hochdrehzahlwelle (32a) zu verteilen, die mit dem kraftstoffdeaktivierten zweiten Gasturbinenmotor (20b) gekoppelt ist.

6. Ausfallverwaltungssystem nach einem der Ansprüche 2 bis 5, wobei die Steuerung (216) dazu ausgebildet ist, einen Wandlerausfall zwischen einer in dem Leistungswandlersystem (214) enthaltenen Komponente und der ersten Elektromaschine der Niederdruck-/Niederdrehzahlwelle (30a) und/oder der zweiten Elektromaschine der Niederdruck-/Niederdrehzahlwelle (31a) zu erkennen, und dazu ausgebildet ist, die Ausgabe der von einer mit der kraftstoffaktivierten Gasturbine gekoppelten Elektromaschine der Hochdruck-/Hochdrehzahlwelle (32a) erzeugten elektrischen Leistung zu steuern.

7. Ausfallverwaltungssystem nach Anspruch 6, wobei die Steuerung (216) als Reaktion auf das Erkennen des Wandlerausfalls ferner dazu ausgebildet ist, ein Zusatzleistungssystem (312) so zu steuern, dass es Zusatzleistung ausgibt, die mit der ersten elektrischen Leistung kombiniert wird, und die kombinierte elektrische Leistung an das zweite hybride elektrische Motorsystem (200b) liefert.

8. Ausfallverwaltungssystem nach einem der vorhergehenden Ansprüche, wobei die Steuerung (216) dazu ausgebildet ist, einen Ausfall des ersten hybriden elektrischen Motorsystems zu erkennen und einen dritten Ausfallmodus aufzurufen, der ein oder das Zusatzleistungssystem (312) so steuert, dass es Zusatzleistung an das zweite hybride elektrische Motorsystem (200b) ausgibt.

9. Ausfallverwaltungssystem nach Anspruch 7 oder 8, wobei das Zusatzleistungssystem (312) ein Batteriesystem (255) und/oder eine Zusatzleistungseinheit, SPU, umfasst.

## Revendications

1. Système de gestion des défauts pour un aéronef, le système de gestion des défauts comprenant :
un premier système de moteur électrique hybride (200a) comportant un premier moteur à turbine à gaz (20a), une première machine électrique de corps basse pression/vitesse (30a), une seconde machine électrique de corps basse pression/vitesse (31a) et une machine électrique de corps haute pression/vitesse (32a) ;
un second système de moteur électrique hybride (200b) comportant un second moteur à turbine à gaz (20b) ; et
un dispositif de commande (216) configuré pour déterminer une descente de l'aéronef et, en réponse à la détermination de la descente, arrêter l'alimentation par le carburant du second moteur à turbine à gaz (20b) inclus dans le second système de moteur électrique hybride (200b) pour fournir un moteur à turbine à gaz désactivé par le carburant tout en fournissant du carburant au premier moteur à turbine à gaz (20a) pour fournir un moteur à turbine à gaz activé par le carburant, dans lequel le dispositif de commande (216) est configuré pour détecter un défaut pendant la descente de l'aéronef et pour invoquer au moins un mode de défaut qui fait fonctionner la première machine électrique de corps basse pression/vitesse (30a) et/ou la seconde machine électrique de corps basse pression/vitesse (31a) pour produire de l'énergie électrique,
dans lequel le défaut est associé à la première machine électrique de corps basse pression/vitesse (30a) ou à la seconde machine électrique de corps basse pression/vitesse (31a), et l'au moins un mode de défaut comporte un premier mode de défaut qui continue à faire fonctionner une machine électrique de corps basse pression/vitesse non défectueuse restante pour produire l'énergie électrique et qui active la machine électrique de corps haute pression/vitesse (32a) couplée au premier moteur à turbine à gaz activé par le carburant (20a) pour produire une seconde énergie électrique qui est combinée avec l'énergie électrique produite par la machine électrique de corps basse pression/vitesse non défectueuse (31a).

2. Système de gestion des défauts selon la revendication 1, comprenant en outre un système de conversion de puissance (214) configuré pour conditionner la sortie de puissance électrique des première et/ou seconde machines électriques de corps basse pression/vitesse.

3. Système de gestion des défauts selon la revendication 2, dans lequel le dispositif de commande (216) est configuré pour commander la sortie de puissance électrique générée par la machine électrique de corps haute pression/vitesse (32) en réponse à l'invocation d'un ou du premier mode de défaut pendant la descente de l'aéronef, et le système de conversion de puissance (214) est configuré pour combiner la sortie de puissance électrique de la machine électrique de corps basse pression/vitesse non défectueuse (31a) avec la sortie de puissance électrique de la machine électrique de corps haute pression/vitesse (32a) pour fournir une puissance électrique combinée.

4. Système de gestion des défauts selon la revendication 3, dans lequel le système de conversion de puissance (214) est configuré pour distribuer la puissance électrique combinée à une seconde machine électrique de corps haute pression/vitesse (32b) incluse dans le second système de moteur électrique hybride (200b).

5. Système de gestion des défauts selon l'une quelconque des revendications 2 à 4, dans lequel le dispositif de commande (216) est configuré pour détecter un défaut de la première machine électrique de corps basse pression/vitesse (30a) ou de la seconde machine électrique de corps basse pression/vitesse (31a), et pour invoquer un deuxième mode de défaut qui commande le système de conversion de puissance (214) pour distribuer la sortie de puissance électrique de la machine électrique de corps basse pression/vitesse non défectueuse (31a) à une seconde machine électrique de corps haute pression/vitesse (32a) couplée au second moteur à turbine à gaz désactivé par le carburant (20b).

6. Système de gestion des défauts selon l'une quelconque des revendications 2 à 5, dans lequel le dispositif de commande (216) est configuré pour détecter un défaut de convertisseur entre un composant inclus dans le système de conversion de puissance (214) et la première machine électrique de corps basse pression/vitesse (30a) et/ou la seconde machine électrique de corps basse pression/vitesse (31a), et est configuré pour commander la sortie de puissance électrique générée par une machine électrique de corps haute pression/vitesse (32a) couplée à la turbine à gaz activée par le carburant.

7. Système de gestion des défauts selon la revendication 6, dans lequel, en réponse à la détection d'un défaut de convertisseur, le dispositif de commande (216) est en outre configuré pour commander un système d'alimentation supplémentaire (312) pour produire une puissance supplémentaire qui est combinée avec la première puissance électrique, et fournit la puissance électrique combinée au second système de moteur électrique hybride (200b).

8. Système de gestion des défauts selon une quelconque revendication précédente, dans lequel le dispositif de commande (216) est configuré pour détecter un défaut du premier système hybride électrique et pour invoquer un troisième mode de défaut qui commande un ou le système d'alimentation supplémentaire (312) pour fournir une puissance supplémentaire au second système de moteur électrique hybride (200b).

9. Système de gestion des défauts selon la revendication 7 ou 8, dans lequel le système d'alimentation supplémentaire (312) comporte un système de batterie (255) et/ou une unité d'alimentation supplémentaire, SPU.
